# FASCICULE DE BREVET EUROPEEN

(11) **EP 0 461 971 B1**
(45) Date de publication et mention de la délivrance du brevet: **15.12.1993**
(21) Numéro de dépôt: 91401504.5
(22) Date de dépôt: 07.06.1991
(51) Int. Cl.: G06F 12/06, G06F 13/40

(54) **Dispositif électronique de connexion**
Elektronische Verbindungsvorrichtung
Electronic connection device

(30) Priorité: 12.06.1990 FR 9007273
(43) Date de publication de la demande: 18.12.1991
(73) Titulaire: SGS-THOMSON MICROELECTRONICS S.A., 94250 Gentilly (FR)
(72) Inventeur: Calzi, Philippe, F-75116 Paris (FR)
(74) Mandataire: Schmit, Christian Norbert Marie

(56) Documents cités:
- EP-A- 0 296 022
- EP-A- 0 433 818
- US-A- 4 802 119
- PROCEEDINGS OF THE IEEE 1989 CUSTOM INTEGRATED CIRCUITS CONFERENCE 15 Mai 1989, SAN DIEGO, CALIFORNIE pages 521 - 524; Y-F CHAN ET AL.: 'A function Specific EPLD for the PS/2 micro-channel bus adapter '
- ELECTRONIC ENGINEERING vol. 58, no. 714, Juin 1986, LONDRES, GB page 36; K.J. WHITELEY: 'EPROM decoder for device selection '

## Description

La présente invention a pour objet un dispositif électronique de connexion particulièrement utilisable pour connecter une unité périphérique à une unité centrale dans un système informatique.

On connaît des dispositifs électroniques de connexion. Ceux-ci comportent essentiellement un arrangement d'interrupteurs actionnables manuellement. Par exemple, en parallèle avec un bus d'adresses de type parallèle et comportant donc un certain nombre de fils conducteurs, dans un exemple huit fils conducteurs, un arrangement d'interrupteurs se compose d'un interrupteur en parallèle avec chacun des fils conducteurs du bus. Ces interrupteurs peuvent avoir deux positions : ouvert ou fermé. Une adresse, un état logique, est envoyée sur le bus d'adresses. Elle est comparée à l'arrangement des interrupteurs. Si cet arrangement est configuré de la même façon que l'adresse à envoyer, le dispositif de connexion produit un signal de validation qui autorise le fonctionnement de l'unité périphérique, sous le contrôle de l'unité centrale, parce que cette unité a été reconnue comme étant l'unité périphérique destinataire des instructions de cette unité centrale. Dans un système informatique, par exemple avec des micro-ordinateurs, une telle unité périphérique peut être une imprimante, en connexion externe avec le micro-ordinateur, ou bien, connecté d'une manière interne dans le micro-ordinateur, un modem ou une carte de communication avec un écran de visualisation ou avec un lecteur de disque optique numérique.

De tels interrupteurs sont généralement de type électromécanique. Ils présentent des inconvénients. D'une part, il faut les manipuler à la main alors leur petitesse les rend souvent peu maniable. D'autre part, pour pouvoir y accéder, il faut réaliser dans les faces arrière, ou avant, des appareils qui contiennent des cartes électroniques auxquelles ces interrupteurs sont fixés, des fenêtres d'accès à ces micro-interrupteurs. Ces fenêtres d'accès constituent des sujétions de fabrication gênantes. Dans d'autres installations, les cartes électroniques comportant ces interrupteurs jouant le rôle de moyens d'accès au périphérique sont connectées sur chant sur une carte-mère.Ces cartes sont très proches les unes des autres. Pour pouvoir alors intervenir sur ces interrupteurs, il est nécessaire de débrocher la carte électronique qui les porte de la carte-mère, après avoir coupé l'alimentation électrique, et de la réembrocher après intervention. Les connecteurs des cartes de communication sur la carte-mère ne sont pas de type facilement déconnectables. Ils ne sont pas destinés à être sollicités trop souvent. Leur fiabilité ne va pas au-delà d'une centaine d'insertions-extractions. Cette technique a pour autre inconvénient qu'il faut aussi enlever préalablement le capot de l'appareil.

En outre, les micro-interrupteurs eux-mêmes sont mécaniquement fragiles. D'une part, ils sont très sensibles aux vibrations : ils sont ainsi susceptibles de changer d'état en fonction d'un choc reçu. Dans ce cas, ils franchissent difficilement les contraintes de validation de type militaire. D'autre part, la nature électromécanique des contacts établis les rend sensibles à la poussière, aux oxydations des contacts, et entraîne avec elle toute une technologie de fabrication très compliquée. Cette technologie de fabrication induit elle-même des coûts élevés de mise en oeuvre.

Dans d'autres dispositifs tels que celui divulgué dans EP-A-0 296 022 on utilise une mémoire de type EEPROM. Pour remplacer alors les micro-interrupteurs par cette mémoire, on déclenche une lecture automatique de cette mémoire dès la mise en service de l'unité périphérique dans laquelle cette carte est installée. Pour ne pas avoir ensuite à lire en permanence la mémoire de type EEPROM, l'invention a pour objet de transférer le contenu de cette mémoire sur un registre de bascules qui, elles, peuvent être lues en permanence. En effet, l'une des contraintes à réaliser pour ressembler le plus possible aux interrupteurs de type électromécanique est de mettre à disposition en permanence l'information d'état logique qui conditionne la connexion du périphérique.

L'invention offre aussi la possibilité supplémentaire de permettre une téléprogrammation de ce circuit de connexion, de manière à en changer au besoin l'adresse.

L'invention telle que définie dans la revendication 1 sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : un dispositif électronique de connexion conforme à l'invention ;
- figure 2 : un détail d'un circuit de décodage d'adresses permettant la validation du fonctionnement de l'unité périphérique ;
- figure 3 : une représentation détaillée du dispositif électronique de connexion de l'invention ;
- figure 4 : un organigramme montrant comment peut être changée l'adresse d'accès à l'unité périphérique dans laquelle est implanté le dispositif de connexion de l'invention.

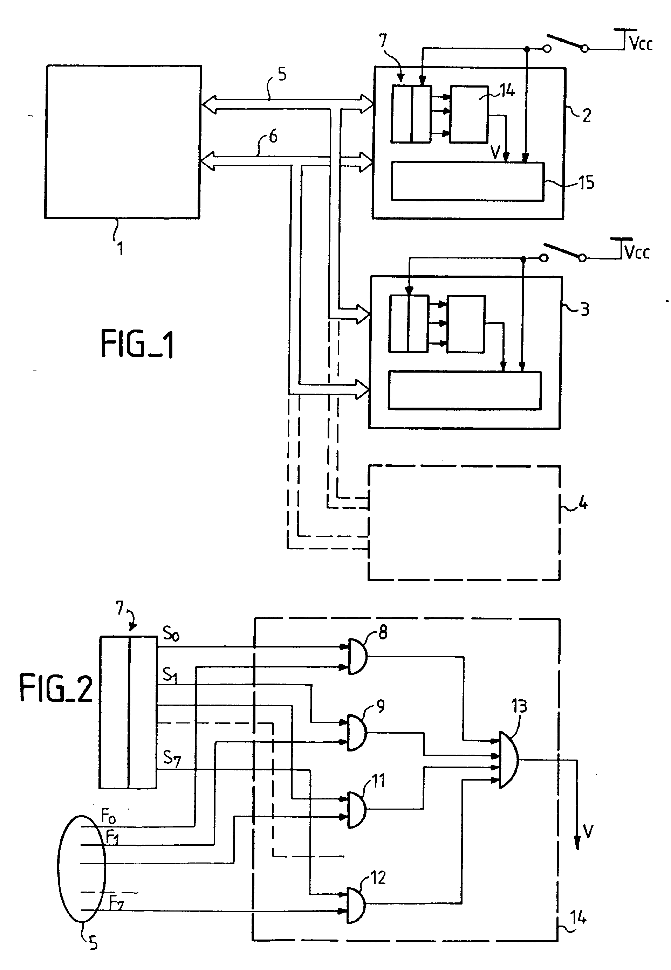

La figure 1 montre un dispositif de connexion comportant une unité centrale 1 destinée à être en communication avec des unités périphériques telles que 2, 3 ou 4. L'unité centrale 1 est reliée aux unités périphériques par un bus d'adresses 5 et par un bus de données 6. Les bus 5 et 6 sont montrés ici différents l'un de l'autre. Cependant, il est possible que les informations d'adresses et de données soient véhiculées par des mêmes conducteurs, jouant alternativement le rôle de bus d'adresses et de bus de données, en fonction d'un protocole de travail et de transfert commun à l'unité centrale et aux unités périphériques. Les unités périphériques peuvent être physiquement contenues dans un même boîtier que celui qui contient l'unité centrale 1. Dans une application, on peut admettre que l'unité centrale concerne un micro-ordinateur muni de son clavier et de son écran de visualisation, tandis que l'unité périphérique 2 concerne une imprimante, l'unité périphérique 3 étant un lecteur de disque optique numérique, etc. ... .

Chaque unité périphérique comporte un organe de configuration 7, mémorisant un état logique. Dans l'état de la technique, l'organe de configuration est formé par un réseau d'interrupteurs en série, avec des résistances, entre l'alimentation Vcc du système et la masse. Lorsqu'un interrupteur est fermé, le point milieu entre cet interrupteur et la résistance délivre un état zéro. Lorsque cet interrupteur est ouvert, le point milieu entre cet interrupteur et la résistance délivre un état 1 (Vcc).

Cet état logique sert à valider l'accès, depuis l'unité centrale, à l'unité périphérique. La figure 2 montre par exemple comment cette validation peut se produire. L'organe de configuration 7 délivre sur ses sorties, par exemple S₀ à S₇, les états logiques 1 ou 0 dépendant de ce qui était contenu en mémoire dans le circuit 7. Par le bus d'adresses 5 est alors transmise une adresse correspondant à des états logiques imposés sur huit fils conducteurs F₀ à F₇. Ces états logiques sont appliqués en correspondance respectivement, avec les sorties S₀ à S₇ du circuit de configuration 7 respectivement sur les entrées d'une groupe de portes ET 8 à 12. Lorsqu'il y a correspondance exacte entre l'adresse disponible sur les fils S₀ à S₇ et le signal mémorisé dans le circuit de configuration 7, les portes ET 8 à 12 délivrent chacune un état UN. Les portes ET 8 à 12 sont reliées par leurs sorties aux entrées d'une porte ET 13 commune. Lorsqu'il y a concordance, la porte 13 délivre un signal V de validation.

Le signal V est utilisé pour mettre en service l'unité périphérique 2. Cette mise en service correspond à une reconnaissance de ce que les ordres qui vont être envoyés par le bus de données 6 sont maintenant effectivement des ordres destinés à cette unité périphérique 2 et non à une autre, par exemple l'unité 3 ou l'unité 4. L'ensemble des portes 8 à 13 servant de circuit de comparaison ou de validation est contenu dans un circuit 14. L'unité périphérique elle-même comporte des circuits 15 d'utilisation. Ces circuits 15 sont bien entendu aussi en relation avec le bus d'adresses et le bus de données 6. Le circuit 14 peut être partie intégrante du circuit 7 ou du circuit 15.

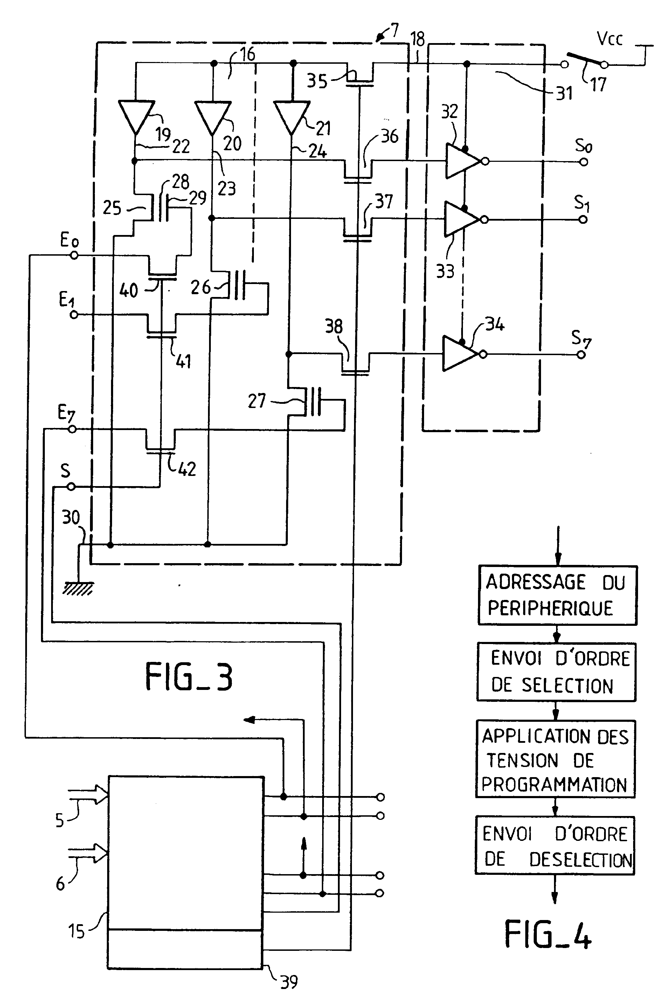

Sur la figure 3, on voit d'une manière précise comment est réalisé le circuit de configuration. Ce circuit de configuration 7 possède une mémoire de type EEPROM 16. Cette mémoire est associée à un protocole automatique de démarrage. Avec ce protocole on lit le contenu de la mémoire, dès la mise sous tension de l'unité périphérique. Au moment de cette mise sous tension, symbolisée ici par l'abaissement d'un interrupteur de mise en service 17, une tension Vcc est appliquée à l'entrée de lecture 18 de la mémoire 16. Des amplificateurs de lecture 19 à 21 de cette mémoire sont alors alimentés électriquement, et débitent chacun du courant dans une ligne de bits qui leur est associée, respectivement 22 à 24. En série dans ces lignes de bits est à chaque fois placé un point mémoire tel que 25 à 27 de type EEPROM. Ce point mémoire de type EEPROM possède un transistor muni d'une grille flottante et d'une grille de commande. Par exemple, pour le transistor 25, la grille flottante 28 est interposée entre le canal de conduction de ce transistor et la grille de commande 29 de ce transistor. Toutes les lignes de bits sont par ailleurs réunies, au-delà des points mémoire 25 à 27 à une liaison à la masse 30. Dans un premier temps, on suppose qu'aucun signal n'est appliqué sur les grilles de commande.
Le courant passe alors dans les lignes de bits 22 à 24 selon l'état passant ou bloqué des transistors 25 à 27. Cet état passant ou bloqué est imposé par le fait que des charges électroniques ont été ou non préalablement stockées sur les grilles flottantes telles que 28. En amont de chacun des points mémoire 25 à 27 on prélève la tension disponible sur les lignes de bits 22 à 24. Lorsque le transistor associé est passant, cette tension est nulle ; elle montre un état zéro. Lorsqu'il est bloqué, cette tension est égale à la tension Vcc : elle montre un état logique 1. On peut donc disposer aux sorties S₀ à S₇ de ces états logiques correspondant aux états de programmation des points mémoires 25 à 27. On remarque au passage que, si le codage de l'adresse se fait sur huit bits, il suffit d'avoir huit sorties. S'il se fait sur 32 bits il faut avoir 32 sorties : dans tous les cas le nombre des points mémoires tels que 25 à 27 est limité. On peut alors en fabriquer un grand nombre sur une même plaquette de circuits intégrés au cours d'une même phase de fabrication.

Pour éviter d'avoir à lire la mémoire 16 en permanence, on utilise un circuit d'accès à cette mémoire. Le circuit décrit ici n'est qu'un circuit donné à titre indicatif pour bien faire comprendre la fonction de lecture temporaire qu'on cherche à imposer. En effet, autant dans l'invention dès qu'on met en service par l'interrupteur 17 l'unité périphérique, on lit immédiatement l'adresse de configuration, autant, pour respecter la technologie EEPROM, il peut paraître nécessaire de ne pas effectuer cette lecture en permanence Si un courant circulait en permanence dans les canaux de conduction des transistors tels que 25 à 27, il pourrait en résulter une autoprogrammation ou une déprogrammation spontanée de ces cellules.

Pour éviter cette situation, on relie les sorties du circuit de configuration 16 à un circuit 31 comportant des bascules telles que 32 à 34. Ces bascules sont par exemple des bascules de type RS. A la sortie du circuit de bascules 31, on dispose des états logiques produits par les points mémoire 25 à 27. Pour faire cesser la lecture, et donc le passage du courant dans les points mémoire 25 à 27, on interpose en série avec les sorties du circuit de configuration 16 et avec l'entrée d'application du potentiel d'alimentation Vcc, un jeu de transistors de passage tels que 35 à 38. Les grilles de commande de ces transistors reçoivent alors un signal produit par un circuit monostable 39. Le circuit 39 est intégré dans le circuit intégré. Ce circuit monostable 39 ne sert qu'à appliquer un signal de blocage de conduction aux transistors 35 à 38 au-delà d'une certaine durée, par exemple au-delà d'une minute. Les -entrées des bascules 32 à 34 sont alors en l'air : ces bascules restent néanmoins dans l'état où elles étaient. Leurs sorties continuent à délivrer les signaux S₀ à S₇ attendus.

Il peut être nécessaire de changer l'adresse d'une unité périphérique. Dans ce but, on envoie au moyen des bus 5 et 6 une série de signaux correspondant à l'organigramme résumé sur la figure 4. Dans un premier temps, on adresse l'unité périphérique 2. Autrement dit, l'adresse véhiculée par le bus d'adresses 5 est alors l'adresse correspondant actuellement à cette unité périphérique. Dans ces conditions, ce signal d'adresse est conforme aux signaux délivrés par les sorties S₀ à S₇ du circuit de configuration 7. Le circuit de validation 14 envoie donc un ordre de validation autorisant le fonctionnement du circuit 15 de gestion de l'unité 2.

Après que cette unité périphérique ait été adressée, on envoie sur le bus de données 6 un ordre S dit de sélection. Cet ordre de sélection est un ordre spécial, inconnu jusqu'à présent du fonctionnement normal de l'unité périphérique 2. Cet ordre n'est destiné qu'à faire fonctionner, en mode de programmation, le circuit mémoire 16. Dans ce but, l'ordre de sélection S est transmis sur des grilles de commande 40 à 42 de transistors de sélection placés en série entre les grilles de commande telles que 29 des transistors des points mémoire respectivement 25 à 27 et les entrées de programmation E₀ à E₇ du circuit de mémorisation 16. Sachant que les transistors 35 à 38 sont maintenant bloqués, on se trouve alors dans la situation suivante. Les points mémoire 25 à 27 ont une entrée branchée à la masse 30, l'autre en l'air, et leur grille de commande qui reçoit les signaux E₀ à E₇. Ces signaux E₀ à E₇ sont fournis par le microprocesseur 15 qui contrôle le fonctionnement de l'unité périphérique 2. Aussi, après avoir envoyé l'ordre S de sélection, on applique par l'intermédiaire du microprocesseur 15 des tensions de programmation sur ces entrées E₀ à E₇. De cette façon, on provoque le stockage ou le déstockage de charges électroniques sur les grilles flottante telles que 28 des points mémoires. Lorsque cette programmation est terminée, on provoque la rupture de la sélection par blocage des transistors 40 à 42.

Autrement dit, la programmation de la mémoire 16 est d'une grande simplicité. Elle comporte une première instruction consistant à adresser l'unité périphérique selon son ancienne adresse, une seconde instruction concernant un mode de sélection en programmation de la mémoire d'adresse d'accès, et enfin une troisième commande destinée à appliquer des potentiels de programmation adéquats sur les grilles de commande des transistors des points mémoires de cette mémoire.

La fonction de programmation, avec la fourniture de tensions de programmation élevées nécessaires, peut être dévolue au microprocesseur 15 qui gère l'unité périphérique 2. Dans un perfectionnement cependant, la fourniture de ces tensions élevées, de l'ordre de 3 à 4 fois Vcc, peut être assurée par le circuit mémoire 16 lui-même. Il suffit dans ce cas de mettre, à l'intérieur de ce circuit, entre les entrées E₀ et les transistors de sélection correspondants, des amplificateurs de tension. Ces amplificateurs n'ont pas à débiter de courant, puisque les grilles de commande 29 des transistors de type MOS constituant les points mémoire 25 ne consomment pas de courant. Ces amplificateurs peuvent être réalisés sous la forme de multiplicateurs de type SCHENKEL, ou bien sous la forme de pompes de charge. Dans ce dernier cas, le circuit 16 doit comporter une autre entrée pour recevoir un signal d'horloge produit par le microprocesseur 15. Ces amplificateurs peuvent être alimentés en permanence par l'alimentation Vcc.

## Revendications

1. Dispositif électronique de connexion pour connecter via un bus (5-6) une unité périphérique (2) à une unité centrale (1), ce dispositif comportant une mémoire du type EEPROM (7) mémorisant un état logique, cet état logique servant à caractériser l'adresse d'accès de l'unité périphérique, cet accès étant effectué depuis l'unité centrale, vers cette unité périphérique, la mémoire étant associée à un circuit automatique de démarrage pour lire dans cette mémoire, (17-21, 35-38) dès la mise sous tension de l'unité périphérique, l'état logique de caractérisation, et en ce que ce dispositif comporte un circuit (40-48) de sélection en écriture de ladite mémoire, ce circuit de sélection en écriture étant adressable par ladite unité centrale via ledit bus, caractérisé en ce que la mémoire est reliée à un jeu (31) de bascules via un circuit (35-38) de lecture pour éviter la détérioration de la mémoire.

2. Dispositif selon la revendication 1, caractérisé en ce que ledit circuit de sélection en écriture est commandé (S) par un circuit de gestion de l'unité périphérique.

## Patentansprüche

1. Elektronische Verbindungsvorrichtung zur Verbindung einer peripheren Einheit (2) mit einer Zentraleinheit (1) über einen Bus (5-6), wobei die Vorrichtung einen Speicher vom EEPROM-Typ (7) umfaßt, der einen logischen Zustand speichert, wobei der logische Zustand dazu dient, die Zugriffsadresse der peripheren Einheit zu kennzeichnen, wobei der Zugriff von der Zentraleinheit zur peripheren Einheit ausgeführt wird, wobei der Speicher einer automatischen Startschaltung zum Lesen des logischen Kennzeichnungszustandes aus dem Speicher (17-21, 35-38) von dem Einschalten der peripheren Einheit an zugeordnet ist und daß die Vorrichtung eine Schaltung (40-48) zum Auswählen der Schreibfunktion des Speichers umfaßt, wobei die Schaltung zum Auswählen der Schreibfunktion durch die Zentraleinheit über den Bus adressierbar ist, dadurch **gekennzeichnet,** daß der Speicher über eine Leseschaltung (35-38) mit einer Gruppe (31) von Kippgliedern verbunden ist, um die Verschlechterung des Speichers zu vermeiden.

2. Vorrichtung nach Anspruch 1, dadurch **gekennzeich****net**, daß die Schaltung zum Auswählen der Schreibfunktion durch eine Schaltung zum Verwalten der peripheren Einheit (S) gesteuert ist.

## Claims

1. Electronic connection device for connecting a peripheral unit (2) to a central unit (1) via a bus (5-6), this device having a memory of the EEPROM type (7) storing a logic state, this logic state serving to characterise the access address for the peripheral unit, this access being effected from the central unit to this peripheral unit, the memory being associated with an automatic initialisation circuit for reading the characterisation logic state in this memory (17-21, 35-38) as soon as the peripheral unit is energised, and in that this device has a circuit (40-48) for write select of the said memory, this write select memory being addressable by the said central unit via the said bus, characterised in that the memory is connected to a set (31) of latches via a read circuit (35-38) so as to avoid corruption of the memory.

2. Device according to Claim 1, characterised in that the said write select circuit is controlled (S) by a circuit for managing the peripheral unit.
